# EUROPÄISCHE PATENTANMELDUNG

(11) **EP 0 785 172 A2**
(43) Veröffentlichungstag der Anmeldung: **23.07.1997**
(21) Anmeldenummer: 97100716.6
(22) Anmeldetag: 17.01.1997
(51) Int. Cl.: C02F 3/18

(54) **Horizontalachsiger Belüftungsrotor für die Oberflächenbelüftung von Wasser und Abwasser**

(30) Priorität: 19.01.1996 DE 19601790
(71) Anmelder: PASSAVANT-WERKE AG, D-65322 Aarbergen 7 (DE)
(72) Erfinder: Werner, Detlef, 65623 Hahnstätten (DE); Schmelz, Wolfgang, 56355 Nastätten (DE)

(57) **Zusammenfassung**

Die Erfindung bezieht sich auf einen bei der biologischen Abwasserbehandlung und Wasserbelüftung bekannten horizontalachsigen Belüftungsrotor mit einer Vielzahl von radial von seiner Welle abstehenden Schlagelementen.
Es ist bekannt, daß die Schlagelemente beim Durchlauf durch das (Ab)Wasser Luftblasen einschlagen, aus denen der Luftsauerstoff in das Wasser übergehen soll. Die Belüftungsrotoren und die Schlagelemente sind so gestaltet, daß eine möglichst große Zahl von Luftblasen gebildet wird. Da die Schlagelemente durch ihre Breite einen hohen Widerstand im Wasser haben, erzeugen sie eine Schleppströmung, die zu der von einem Vortriebsaggregat aufrechterhaltenen Umlaufgeschwindigkeit hinzuaddiert wird. Die Umlaufgeschwindigkeit kann demzufolge nicht unabhängig geregelt werden. Außerdem geht Eintragsleistung wegen der geringeren Geschwindigkeitsdifferenz für den Luftblaseneintrag verloren.
Die Aufgabe, einen Belüftungsrotor zu finden, der den Luft-sauerstoff wesentlich ökonomischer einträgt und die Umlaufströmung möglichst überhaupt nicht beeinflußt, wird erfindungesgemäß dadurch gelöst, daß die Schlagelemente eine in Achsrichtung gemessene Höchstbreite von 4 cm haben, daß die in Achsrichtung gemessene Lücke zwischen zwei benachbarten Schlagelementen das Ein- bis Eineinhalbfache der Breite der Schlagelemente ist, daß die Schlagelemente zum (Ab)Wasserspiegel so angestellt sind, daß sie im wesentlichen mit ihrer ganzen radialen Länge gleichzeitig eintauchen, daß der Winkelabstand von zwei in Umfangsrichtung aufeinanderfolgenden Schlagelementen so groß ist, daß die vom vorlaufenden Schlagelement mitgezogene Luftschleppe vor dem nachlaufenden Schalgelement endet, und daß die Umfangsgeschwindigkeit im Verhältnis zur Lücke so groß gewählt ist, daß das getroffene Wasser ohne spürbare Erzeugung einer Schleppströmung die Schlagelemente umströmt. Ein auf diese Weise neu gestalteter und betriebener Belüftungsrotor erbringt gegenüber den weithin bekannten "Mammutrotoren" (eingetr. Warenzeichen der PASSAVANT-WERKE AG) eine um bis zu 40% gesteigerte Ökonomie, was keineswegs zu erwarten war.

## Beschreibung

Die Erfindung betrifft einen für die Oberflächenbelüftung von Wasser und Abwasser benötigten horizontalachsigen Belüftungsrotor, der in bekannter Weise mit einer Vielzahl von sternförmig von der Welle abstehenden, stab- oder streifenförmigen starren Schlagelementen ausgerüstet ist, die bei Rotation Luft von der Umgebung her in den Spiegel des Wasser- oder Abwasserkörpers einschlagen und danach auf einem Bogen durch das Abwasser bewegt werden.

Es wurde schon früh erkannt, daß die Zufuhr von Sauerstoff in Wasser oder Abwasser nur durch die schnelle Grenzflächenerneuerung an der Übergangsstelle des Sauerstoffs in das Wasser intensiviert werden kann. Die früheste Technik, diese Grenzflächenerneuerung herbeizuführen, waren die sog. Kessenerbürsten, deren schmalzinkigen federnden Kämme beim Rotieren das Wasser tröpfchenförmig über die Wasserfläche verspritzten. Diese im Verhältnis zu ihrem Volumen eine große Grenzfläche aufweisenden Tröpfchen nehmen auf ihrem Flug den Luftsauerstoff auf und tragen ihn nach dem Zurückfallen in den Wasserkörper ein (Z.:"Gesundheits-Ingenieur", Heft 7 v. 10.07.1962).

Auf der Suche nach einer Erhöhung des Sauerstoffeintragsvermögens wurde zunächst der Bürstendurchmesser vergrößert und die Drehzahl erhöht. Die Versuche mit diesen neuen Parametern erbrachten jedoch nicht den erhofften Anstieg (Dr.J.Muskat: "Über die Weiterentwicklung der Kessenerbürste zu modernen Rotoren hoher Leistung", in "Mitteilungen aus dem Forschungsinstitut für Gesundheitstechnik, TNO, Den Haag, Holland, "Münchner Beiträge", Band 5).

Die Umwandlung der federnden Kämme in starre streifen- oder plattenförmige Schlagelemente und die Optimierung des Breiten/Lücken-Verhältnisses der Schlagelemente, verbunden mit einer Vergrößerung des Außendurchmessers, erbrachten dann aber doch eine wesentliche Erhöhung des Sauerstoffeintragsvermögens und der auf die eingesetzte Energie bezogenen Ökonomie. Eine solche Belüftungseinrichtung ist anschließend unter der für die PASSAVANT-WERKE, Aarbergen, als Warenzeichen eingetragenen Bezeichnung "Mammutrotor" in zahlreichen Kläranlagen und zur Gewässerbelüftung eingesetzt worden.

Mit dem Aufkommen der sog. Druckluftbelüftung, die eine höhere Eintragsleistung erbringt, wurde der Wunsch nach einer Erhöhung der Eintragsleistung und der Ökonomie bei der Oberflächenbelüftung laut. Als Verbesserungen an dem horizontalachsigen Belüftungsrotor wurden daraufhin eine Verschmälerung der Schlagelemente im achsnahen Bereich (sog. Pfeilschwanzschaufel), die wellen- oder W-förmige Profilierung der Schlagelemente (DE-C-1 080 938) und das Weglassen der achsnahen Abschnitte der Schlagelemente (sog. Käfigwalze - DE-C-1 167 279) vorgeschlagen. Auch die Ausbildung des Rotors als Lochrohrtrommel (DE-C-1 030 775) wurde vorgeschlagen und erprobt.

Eine Entwicklung in eine andere Richtung ist die Ausbildung der Schlagelemente als umströmungsgünstige Doppelflügel-Profile (DE-C-16 58 147). Auch zusätzliche Schlagelemente mit Schrägstellung zur Erzeugung einer zur Seite gerichteten Strömung (DE-A-19 23 121) und schraubengangförmig gewundene Schlagelemente (DE-C-19 58 229), die eine nach unten gerichtete Strömungskomponente verursachen und damit die Luftblasen tiefer in das Abwasser tragen sollen, waren Gegenstand von Weiterentwicklungen.

Eine mit der Käfigwalze vergleichbare Konstruktion ist die am Umfang mit kurzen Schlagelementen bestückte Lochtrommel (DE-A-25 37 965). Auch eine Lochtrommel, die hinter den Löchern unterdruckerzeugende äußere Vorsprünge aufweist (DE-B-1 027 186), wurde in Erwägung gezogen.

Allen mit Schlagelementen ausgestatteten Rotoren ist gemeinsam, daß sie bei Rotation einen Wasservortrieb erzeugen, der die Umwälzung und/oder den Umlauf des Abwassers im Ring- bzw. Kreisbecken und Umlaufgraben aufrechterhalten soll. Da der von den Rotoren erzeugte Vortrieb in vielen Fällen aber nicht ausreicht, um eine absetzfreie Strömungsgeschwindigkeit zu erreichen, werden vermehrt Zusatzantriebe in Form von z.B. Unterwasserpropellern eingesetzt.

Der Nachteil eines solchen kombinierten Belüftungs- und Umwälzsystems liegt darin, daß der Sauerstoffeintrag nicht unabhängig vom Wasserumlauf geregelt werden kann, wie es z.B. für die simultane Denitrifikation und bei der Anpassung an die Tagesganglinie erwünscht ist. Bei der Druckluftbelüftung ist diese unabhängige Regelung hingegen möglich. Es stellte sich daher die Aufgabe, die bekannten Rotorbauarten mit einer Vielzahl von sternförmig an der Welle befestigten Schlagelementen so zu modifizieren, daß der Luftsauerstoffeintrag ohne die Erzeugung einer spürbaren Schleppströmung mit hoher Ökonomie vonstatten geht.

Bei der Lösung dieser Aufgabe wurde das Wissen angewendet, daß der Sauerstoffübergang an der Grenzfläche Luft/Wasser in Bruchteilen von Sekunden erfolgt, wobei die im molekularen Bereich angesiedelte Grenzschicht sofort gesättigt wird, und daß die Diffusion des übergegangenen Sauerstoffs aus der Grenzschicht in den Wasserkörper nur sehr langsam vonstatten geht (A.Pasveer: "Untersuchungen über das Belebtschlammverfahren für die Reinigung von Abwasser", Gesundheits-Ingenieur Heft 21/22, 1955, Seite 332 ff.). Für den effektiven Eintrag des Luftsauerstoffs ist es also notwendig, sowohl eine große Grenzfläche für den Übergang zur Verfügung zu stellen, als auch die sauerstoffgesättigte Grenzschicht schnellstens mit dem Wasserkörper zu vermischen und eine neue sauerstoffarme Grenzschicht anzubieten. Diese Aufgabe wird erfindungsgemäß durch die Kombination folgender konstruktiver Merkmale gelöst:
a. Die Schlagelemente haben eine in Achsrichtung gemessene Breite von höchstens 4 cm;
b. Der axiale Abstand ("Lücke") zwischen zwei in Achsrichtung benachbarten Schlagelementen beträgt mindestens das Einfache und höchstens das 1,5fache der Breite der Schlagelemente;
c. Die Schlagelemente sind im Verhältnis zum Abwasserspiegel und zum Abstand der Horizontalachse vom Wasserspiegel so angestellt, daß sie im wesentlichen mit ihrer ganzen radialen Länge gleichzeitig in den Wasserkörper einschlagen;
d. Der Winkelabstand von zwei in einem Stern aufeinanderfolgenden Schlagelementen ist in Abhängigkeit von der Umfangsgeschwindigkeit so groß, daß die von dem jeweils vorderen Schlagelement mitgezogene Luftschleppe vor dem nächsten Schlagelement endet;
e. Die Umfangsgeschwindigkeit ist im Verhältnis zur Breite der Schlagelemente und zu ihrem axialen Abstand ("Lücke") so gewählt, daß das getroffene Wasser die Schlagelemente ohne spürbare Erzeugung einer Schleppströmung umströmt.

Die aufgezählten konstruktiven Merkmale wirken in überraschender Weise zusammen. Halbtechnische Versuche mit einem erfindungsgemäß ausgebildeten Belüftungsrotor haben gezeigt, daß der Sauerstoffeintrag sehr effektiv ist. Die im Vergleich mit heute eingesetzten Belüftungsrotoren erhöhte Umfangsgeschwindigkeit erzeugt in Verbindung mit der fast vertikalen Eintauchbewegung der Schlagelemente hinter jedem Schlagelement eine hochturbulente Luftschleppe, deren Grenzflächen mikroverwirbelt sind, so daß der übergegangene Sauerstoff sofort mit dem benachbarten Wasserkörper vermischt und die Grenzfläche häufig erneuert wird. Das von den Schlagelementen getroffene Wasser hat aufgrund des richtigen Breite/Lücken-Verhältnisses die Möglichkeit, in die Lücke auszuweichen. Die Luftschleppe ist schmal und kurz. Sie endet erfindungsgemäß vor dem nächstfolgenden Schlagelement. Das nächste Schlagelement trifft dann auf sauerstoffarmes und weitgehend blasenfreies Wasser. Das spiegelparallele Eintauchen der Schlagelemente bedeutet aber auch, daß die Schlagelemente fast senkrecht wieder aus dem Abwasser austauchen. Folglich werden in dieser Phase kaum Wassertropfen aus dem Wasserkörper herausgeschleudert. Bei den bekannten Belüftungsrotoren ist der Spritzwasseranteil erheblich; er kostet Energie und muß durch Spritzschutzhauben rückgeführt werden, wobei der Sauerstoffeintrag in das Spritzwasser relativ gering ist.

Aus der DE-A-27 30 070 ist zwar ein Belüftungsrotor bekanntgeworden, dessen Schlagelemente entgegen der Umlaufrichtung einmal so abgewinkelt sind, daß die Schlagelemente etwa spiegelparallel aufschlagen. Der Effekt, der mit diesem Merkmal erreicht werden soll, ist die Vergrößerung der eingezogenen Luftmenge. Dieses Ziel soll mit dem erfindungsgemäßen Parallelanordnung der Schlagelemente nicht erreicht werden. Bei der Erfindung ist im Gegensatz hierzu die eingeschlagene Luftmenge durch das richtige Breite/Lücken-Verhältnis absichtlich kleiner bemessen, weil erkannt wurde, daß während des Durchlaufs der Schlagelemente überhaupt nicht genug Grenzflächen für den Übergang des in der Luftmenge enthaltenen Sauerstoffs zur Verfügung gestellt werden können. Die Luft, die mit viel Energieaufwand eingeschlagen wurde, entweicht anschließend ungenutzt in Form von großen Blasen.

Messungen an dem erfindungsgemäß ausgebildeten und betriebenen Belüftungsrotor haben eine Steigerung des Sauerstoffeintrags und der Ökonomie von bis zu 30% ergeben. Dies bedeutet eine ganz erhebliche Senkung der Betriebskosten der biologischen Stufe einer Kläranlage. Die installierte Antriebsleistung der Rotoren kann gesenkt werden.

In vorteilhafter und bevorzugter Ausgestaltung der erfindungsgemäßen Belüfterkonstruktion ist der achsnahe Innenabschnitt der abgewinkelten Schlagelemente wesentlich schmäler als der eintragswirksame Außenabschnitt. Da der Innenabschnitt zum Lufteintrag keinen Beitrag leistet, weil seine Umfangsgeschwindigkeit zu gering ist, kann er so schmal gemacht werden, daß er nur noch die Aufgabe der Befestigung des Außenabschnitts erfüllt. Als Element für die Erzeugung einer Schleppströmung fällt er dann ebenfalls fort.

Die überraschenden Vorteile der Erfindung stellen sich bei einer Ausbildung der Schlagelemente als Flachstreifen ein. Eine weitere Erhöhung des Wirkungsgrads kann jedoch erzielt werden, wenn die Vorderseite der Streifen umströmungsgünstig profiliert ist. Hiermit ist z.B. ein stumpfer Winkel mit vorneliegender Firstkante oder eine Art angepaßtes Vogelschwingenprofil gemeint. Mit einer solchen Profilierung kann auch die Umströmung der Schlagelemente und die dabei auftretende Querströmung beeinflußt werden. Wenn z.B. die Profilvorderseite unsymmetrisch oder einseitig schräg ausgebildet ist, dann kann damit eine in eine Richtung überwiegende Querströmung herbeigeführt werden, die im Interesse einer Fortführung der mit Sauerstoff gesättigten Wasseranteile erwünscht ist. Auch die Turbulenz in der Grenzschicht der Luftschleppe kann entsprechend gesteuert und ggf. sogar die Luftschleppe in die gewünschte Abströmungsrichtung gedrückt werden.

Ein solcher Belüftungsrotor eignet sich insbesondere für den neuen Einbau in ein Umlaufbecken/graben, der durch die Ausrichtung der Drehachse in Strömungsrichtung gekennzeichnet ist. Die Hauptströmung im Becken sorgt dann für den gewünschten Querabtransport der sauerstoffgesättigten Wasseranteile von der Luftschleppe weg. In diesem Zusammenhang kann es sinnvoll sein, die Schlagelemente bzw. deren Hauptabschnitte in Achsrichtung abstandsverschieden anzuordnen, insbesondere ihren radialen Abstand in Strömungsrichtung stetig oder in mehreren Stufen zu verkleinern. Die mit Sauerstoff gesättigten Wasseranteile können dann ohne Beeinflussung durch in Abströmrichtung folgende Schlagelemente diffundieren. Eine solche Belüftung ist besonders effektiv.

Um Schwingungen im Antrieb der Rotoren zu vermeiden, können die Schlagelemente, wie von im Einsatz befindlichen "Mammutrotoren" her bekannt, in Umfangsrichtung gestaffelt angeordnet werden (sog. "Pfeilung"). Auch dies ist ein Beitrag zu einem sehr weitgehend unbeeinflußten Wegtransport der sauerstoffgesättigten Wasseranteile.

Eine weitere vorteilhafte Ausgestaltung besteht darin, die Schlagelemente in einer ebenfalls vom "Mammutrotor" bekannten Weise in Achsrichtung zu staffeln. Dadurch steht das in Umfangsrichtung nachfolgende Schlagelement sozusagen neben der Luftschleppe. Dieses Schlagelement trifft also auf weitgehend unbelüftete Wasseranteile. Wenn diese Staffelung der Schlagelemente mit der "Pfeilung" und ggf. auch noch mit der Unsymmetrie der Vorderseitenprofilierung kombiniert wird, dann erhält man einen Oberflächenbelüfter, der mit sehr hohem Wirkungsgrad Luftsauerstoff in das Abwasser einträgt.

In den Abbildungen sind mehrere bevorzugte Ausführungsmöglichkeiten der erfindungsgemäßen Belüftungseinrichtung und ihrer im Betrieb eintretenden Wirkungen dargestellt. Und zwar zeigen:
- Fig. 1: einen schematischen Querschnitt durch ein mit Schlagelementen bestückte Rotorwelle,
- Fig. 2: ein einzelnes Schlagelement in der Ansicht II nach Fig. 1,
- Fig. 3: zwei mögliche Profile für die Schlagelemente,
- Fig. 4: das Breite/Lücke-Verhältnis für in Umfangsrichtung gestaffelt angeordnete Reihen von Schlagelementen,
- Fig. 5: das Breite/Lücke-Verhältnis für in Achsrichtung verschoben angeordnete Reihen von Schlagelementen,
- Fig. 6: zwei Versionen für in Radialrichtung verschieden lange oder abstandsverschieden angeordnete Schlagelemente,
- Fig. 7: Größe und Form der Luftschleppe bei in Drehung befindlichen Schlagelementen,
- Fig. 8: Querschnitt durch eine hinter einem Schlagelement ausgebildete Luftschleppe.

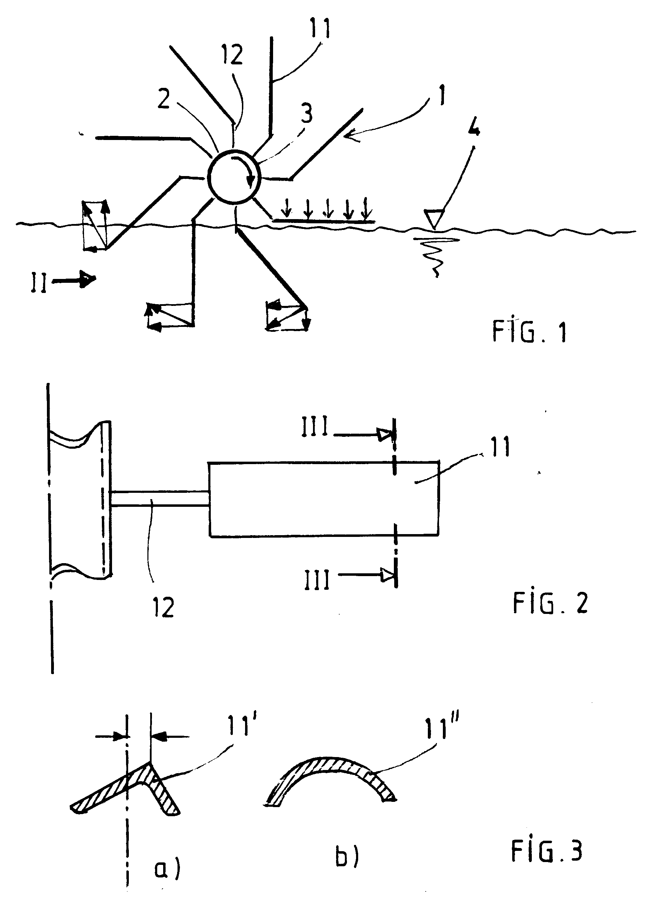

Die bevorzugte Form der Schlagelemente 1 ist aus Fig. 1 zu ersehen. An der aus einem Rohr bestehenden Welle 2 sind pro Stern acht Schlagelemente im gleichbleibenden Winkelabstand befestigt. Jedes Schlagelement 1 ist aus Flacheisen oder einem Blechzuschnitt hergestellt und ist in Achsnähe einmal entgegen der Drehrichtung 3 abgewinkelt. Durch die Abwinkelung ergibt sich ein radial verlaufender Innenabschnitt 12 und ein etwa tangential zum Wellenumfang verlaufender Hauptabschnitt 11. Die Innenabschnitte bleiben größtenteils über der Wasserlinie 4, weil sie wegen der kleinen Umfangsgeschwindigkeit ohnehin keinen Beitrag zum Lufteintrag liefern würden. Wenn sie jedoch, z.B. durch Anstieg des Wasserspiegels, eintauchen, dann ist es vorteilhaft, sie nach Fig. 2 so schmal zu machen, daß für die Bewegung durch das Wasser keine Energie aufgebracht werden muß. Die Innenabschnitte haben dann nur noch eine für die Biegefestigkeit ausreichende Dicke.

Es ist deutlich zu erkennen, daß der Hauptabschnitt 11 der Schlagelemente mit nahezu seiner ganzen Länge gleichzeitig auf das Wasser schlägt. Der Hauptabschnitt bewegt sich also zu Beginn weitgehend vertikal in das Wasser und zieht die Luftschleppe in Bereiche, in denen erhöhter Druck herrscht, der den Sauerstoffübergang begünstigt. Auch in der Nähe des tiefsten Punktes der Kreisbewegung ist die vertikale Bewegungskomponente noch beachtlich.

Die Zerlegung der Umfangsgeschwindigkeit in die Horizontalkomponente im Augenblick des Austauchens hingegen zeigt, daß der Wasservortrieb durch diese Anstellung der Schlagelemente in erwünschter Weise sehr klein ist. Auch die Vertikalkomponente ist klein, so daß sehr wenig Wasseranteile als Spritzwasser aus dem Wasserkörper gehoben werden. Das Ausheben von Spritzwasser ist unökonomisch. Außerdem entstehen durch das Fehlen von großen Spritzwassermengen weniger Aerosole, die in die Umgebung verschleppt werden. Die Geräuschentwicklung ist durch den Fortfall des auf die Spritzschutzhaube prallenden Wassers ebenfalls wesentlich geringer. Kläranlagen mit den neuen Oberflächenbelüftungsrotoren können näher an Wohngebieten errichtet werden.

Fig. 3 zeigt zwei Möglichkeiten für die Vorderseitenprofilierung der Schlagelemente bzw. Hauptabschnitte. Nach a) kann ein ungleichschenklicher Winkel 11' und nach b) ein Kreisbogen 11'' verwendet werden. Diese von der flachen Form abweichende Profilierung erhöht zusätzlich die Biegesteifigkeit der Schlagelemente. Mit dem ungleichschenkligen Winkelprofil 11' kann die Ablenkströmung in zwei ungleiche Teile aufgeteilt und damit eine gewisse Querströmung in Richtung der Belüfterachse erzeugt werden.

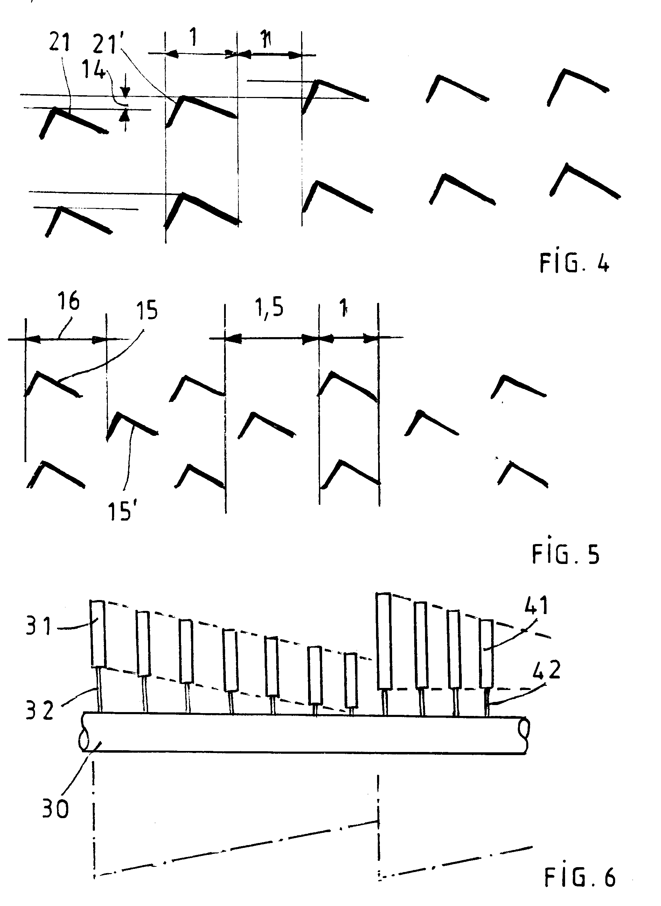

Das ungleichschenklige Winkelprofil wird auch bei den Ausführungsformen nach den Figuren 4 und 5 benutzt. Die Schlagelemente 21, 21' einer Reihe sind nach Fig. 4 stufenweise in Umfangsrichtung um den Bogenwinkel 14 versetzt an der Welle befestigt. Die Schlagelemente eines Sterns fluchten in Umfangsrichtung. Durch das Voreilen des jeweils benachbarten Schlagelements wird der vom längeren Schenkel des Winkelprofils abgelenkte größere Wasseranteil zu einer unsymmetrischen Ausbildung der Luftschleppe am voreilenden Schlagelement und zu einer seitlichen Fortführung der mit Sauerstoff gesättigten Wasseranteile führen. Der Abstand der Schlagelemente in Umfangsrichtung ist hier verkürzt dargestellt.

Bei der gestaffelten Anordnung der Schlagelemente nach Fig. 5 sind die Schlagelemente 15' der nachlaufenden Reihe in Achsrichtung um den Betrag 16 versetzt und stehen dann in der Lücke zwischen den Schlagelementen 15 der vorlaufenden Reihe. Während bei Fig. 4 das Verhältnis von Breite zu Lücke etwa 1:1 ist, beträgt die Breite der Lücke bei Fig. 5 das 1;5fache der Breite der Schlagelemente. Der Grund hierfür ist, daß das von den vorlaufenden Schlagelementen aufgeteilte Wasser Gelegenheit zum verlustarmen Umströmen des jeweils nachlaufenden Schlagelements bekommen muß. Die ungleichteilige Ablenkung des Wasserteilvolumens hat auch hier die Folge, daß die Luftschleppe des nachlaufenden Schlagelements seitlich weggedrückt und die sauerstoffgesättigten Wasseranteile quer abtransportiert werden.

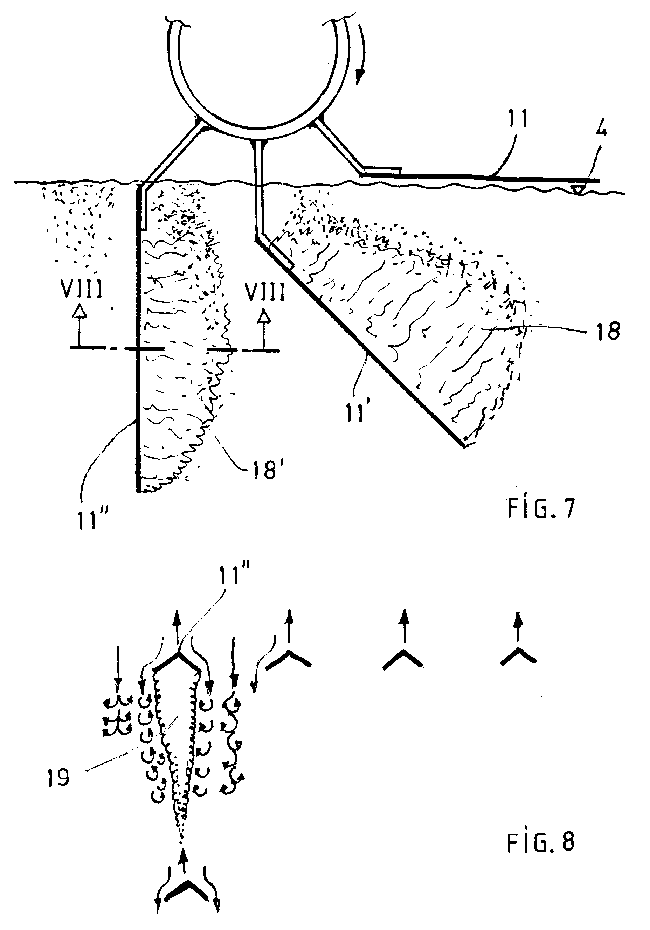

Für die radiale Länge der Schlagelemente bzw. ihrer Hauptabschnitte und dem radialen Abstand von der Welle gibt es mehrere Möglichkeiten. Die vorteilhaftesten sind in Fig. 6 gezeigt. Bei dem linken Teil der Welle 30 sind die Hauptabschnitte 31 immer gleich lang; ihr Abstand von der Welle wird aber in Achsrichtung bis Null stetig kleiner. Die schmalen Innenabschnitte 32 verkürzen sich entsprechend. Diese Sägezahnanordnung kann mehrmals wiederholt werden.

Beim rechten Teil der Welle sind alle Innenabschnitte 42 gleich lang, die Länge der Hauptabschnitte nimmt aber stetig ab. Auch diese Form kann mehrmals auf die Länge des Rotors wiederholt werden. Der Vorteil dieser beiden Bauformen ist darin zu sehen, daß ein Teil des an den langen Schlagelementen sauerstoffgesättigten Wassers in Achsrichtung an den kürzeren vorbeiströmen und mit dem Abwasser vermischt werden kann.

In Fig. 7 sind in weitgehend schematischer Darstellung die Vorgänge gezeigt, die sich an einem in Betrieb befindlichen Belüftungsrotor einstellen. An dem über der Wasserlinie 4 angekommenen Schlagelement 11 ist gezeigt, daß dieses mit seiner ganzen Länge gleichzeitig in das Wasser taucht. Bei dem davor eingeschlagenen Element 11' hat sich die Luftschleppe 18 voll ausgebildet; sie endet in Form eines Blasenvorhangs mit spürbarem Abstand vor dem nachfolgenden Schlagelement 11''. Bei diesem zuerst ins Wasser eingeschlagenen Element 11'' hat sich die Luftschleppe 18' schon zum größten Teil in einen Blasenvorhang gewandelt. Nur ein kleiner Teil der Luftblasen steigt ungenutzt zur Oberfläche auf.

Fig. 8 ist ein Querschnitt nach VIII-VIII von Fig. 7, also durch die Luftschleppe, die sich hinter einem als Winkel profilierten Schlagelement 11'' ausbildet. Die um die Außenkanten des Profils abgelenkten Wasseranteile bilden an der Grenzschicht zur mit Luft gefüllten Unterdruckzone 19 ausgeprägte Mikrowirbel, die sich auch in die nicht querbeschleunigte Wassermasse in der Lücke fortpflanzen und diese hochturbulent vermischen. Die Mikrowirbel bringen die Scherkräfte auf, die zur immer wiederkehrenden Erneuerung der Grenzschicht nötig sind. Die Scherkräfte sind auch für die Erzeugung von Mikroluftblasen verantwortlich, die als Blasenvorhang das Ende der Luftschleppe bilden. Die Diffusion des an der Grenzfläche in die Grenzschicht übergegangenen Sauerstoffs in den Wasserkörper ist infolge dieser weitreichenden Turbulenz sehr gut. Das sauerstoffangereicherte Wasser wird durch die von einem Umwälzelement unabhängig erzeugte Strömung schnell fortgetragen und eingemischt. Dabei ist es von großem Vorteil, wenn diese Abströmung in Richtung der Rotorachse, also in der Abbildung lotrecht zur Zeichenbene, erfolgt. Die Belüftungsrotoren müssen dann mit ihrer Welle in Umströmungsrichtung ausgerichtet werden. Auch eine spitzwinklige Ausrichtung kommt in Frage. Der große Vorteil einer solchen Anordnung ist in dem Fortfall der für die bisher üblichen horizontalachsigen Belüftungsrotoren notwendigen, das Ringbecken oder einen Grabenarm über spannenden Brücke zu erblicken. Die Rotoren können an der Graben- bzw. Beckenwand installiert und dann auch von außen gewartet werden. Der in der Regel als Unterwasserpropeller ausgebildete Wasserumwälzantrieb benötigt keine Brücke. Es ist sogar denkbar, auch das Umwälzantriebsaggregat in unmittelbarer Nähe des Belüftungsrotors, also auch an der Wand, zu montieren.

Ein weiterer auslegungsrelevanter Vorteil ergibt sich bei dieser Längsanordnung der Belüftungsrotoren dadurch, daß die radiale Breite des Ringbeckens bzw. die Breite des geraden Arms des Umlaufgrabens nicht die begrenzende Dimension für den Sauerstoffeintrag ist. Der Belüftungsrotor kann jetzt so lang werden, wie es für den Sauerstoffbedarf erforderlich ist. Die von dem laufenden Rotor ggf. doch noch erzeugte kleine Schleppströmung ist dann quer zur Umlaufströmung gerichtet und verursacht zusammen mit dieser Hauptströmung eine sehr erwünschte Querumwälzung des Abwassers, die eine noch bessere Durchmischung ergibt. Je nach Drehrichtung der Belüftungsrotoren ist die Schleppströmung an der Beckenwand absteigend und trägt dadurch das sauerstoffgesättigte Abwasser in tiefere Beckenabschnitte.

Eine weitere Ausführungs- und Abwandlungsmöglichkeit ist die Kombination verschieden profilierter Schlagelemente auf einem Rotor. So können z.B. zwischen den Sauerstoff eintragenden Schlagelementen zusätzliche Schaufeln montiert werden, die eine spürbare Querströmung erzeugen. Die Staffelung von in einer Reihe benachbarten Schlagelementen kann auch durch geänderte Biegewinkel der Hauptabschnitte herbeigeführt werden. Die Schlagelemente können gruppenweise auf Naben oder Halbnaben oder Nabenschalen angeordnet werden. Statt einer rohrförmigen Welle mit schmalen Innenabschnitten kann ein Spantenkäfig genommen werden, an dessen Längsstangen die Schlagelemente unter einem von der Radialen abweichenden Winkel befestigt werden. Ein solcher Spantenkäfig hätte den Vorteil, daß sich kein Wasserstau vor der die Wasserlinie beinahe berührenden Welle bilden kann. Bei einer massiven Welle könnte der Wasserstau nicht schnell genug abfließen.

## Patentansprüche

1. Um eine Horizontalachse rotierende Belüftungseinrichtung für Abwasser, mit einer Vielzahl von sternförmig von der Welle abstehenden, stab- oder streifenförmigen starren Schlagelementen, die bei Rotation von der Umgebung her in den Spiegel des Abwassers einschlagen und danach auf einem Bogen durch das Abwasser bewegt werden, **gekennzeichnet** durch folgende Merkmale:
a. die Schlagelemente haben eine in Achsrichtung gemessene Breite von höchstens 4 cm;
b. der axiale Abstand ("Lücke") zwischen zwei in Achsrichtung benachbarten Schlagelementen beträgt mindestens das 1fache und höchstens das 1,5fache der Breite der Schlagelemente;
c. die Schlagelemente sind im Verhältnis zum Abwasserspiegel und zum Abstand der Horizontalachse vom Abwasserspiegel so angestellt, daß sie im wesentlichen mit ihrer ganzen Länge gleichzeitig in den Wasserkörper einschlagen;
d. der Winkelabstand von zwei in einem Stern aufeinanderfolgenden Schlagelementen ist in Abhängigkeit von der Umfangsgeschwindigkeit so groß, daß die von dem jeweils vorderen Schlagelement mitgezogene Luftschleppe vor dem nächsten Schlagelement endet;
e. die Umfangsgeschwindigkeit ist im Verhältnis zur Breite der Schlagelemente und zum axialen Abstand ("Lücke") zweier benachbarter Schlagelemente so gewählt, daß das getroffene Abwasser ohne spürbare Erzeugung einer Schleppströmung die Schlagelemente umströmt.

2. Belüftungseinrichtung nach Anspruch 1, mit Schlagelementen, die aus einem radial von der Welle abstehenden Innenabschnitt und einem unter einem stumpfen Winkel abgebogenen Hauptabschnitt bestehen, **dadurch gekennzeichnet**, daß der Innenabschnitt wesentlich schmaler als der Hauptabschnitt und nur als Befestigungsteil für den Hauptabschnitt ausgebildet ist.

3. Belüftungseinrichtung nach Anspruch 1 oder 2, **dadurch gekennzeichnet**, daß die Vorderseite der Schlagelemente bzw der Hauptabschnitte umströmungsgünstig profiliert ist.

4. Belüftungseinrichtung nach Anspruch 3, **dadurch gekennzeichnet**, daß die Schlagelemente bzw deren Hauptabschnitte aus Winkelprofil mit vorneliegender Firstkante bestehen.

5. Belüftungseinrichtung nach einem oder mehreren der Ansprüche 1 bis 4, **dadurch gekennzeichnet**, daß das Schlagelement bzw dessen Hauptabschnitt an der Vorderseite für eine unsymmetrische, insbesondere für eine nur nach einer Seite gerichtete Umströmung profiliert ist.

6. Belüftungseinrichtung nach einem oder mehreren der Ansprüche 1 bis 5, **dadurch gekennzeichnet**, daß das jeweils in Achsrichtung benachbarte Schlagelement in Umfangsrichtung um einen kleinen Winkel versetzt angeordnet ist.

7. Belüftungseinrichtung nach einem oder mehreren der Ansprüche 1 bis 6, **dadurch gekennzeichnet**, daß die für das Einschlagen wirksame Länge der Schlagelemente bzw der Hauptabschnitte in Achsrichtung stetig oder in mehreren Stufen nach innen abnimmt.

8. Belüftungseinrichtung nach Anspruch 7, **dadurch gekennzeichnet**, daß der radiale Abstand der Hauptabschnitte von der Welle in Achsrichtung stetig oder in mehreren Stufen abnimmt.

9. Belüftungseinrichtung nach einem oder mehreren der Ansprüche 1 bis 8, **dadurch gekennzeichnet**, daß die jeweils in Umfangsrichtung aufeinanderfolgenden Schlagelemente einer Reihe um höchstens ihre Breite in Achsrichtung versetzt angeordnet sind.
